(19) Europäisches Patentamt
European Patent Office
Office européen des brevets

(11)  EP 1 575 797 B1

(12)  EUROPÄISCHE PATENTSCHRIFT

(45)  Veröffentlichungstag und Bekanntmachung des Hinweises auf die Patenterteilung:
**05.09.2007  Patentblatt 2007/36**

(21)  Anmeldenummer: **03812551.4**

(22)  Anmeldetag: **25.07.2003**

(51)  Int Cl.:
***B60K 6/04*** *(2006.01)*

(86)  Internationale Anmeldenummer:
**PCT/DE2003/002516**

(87)  Internationale Veröffentlichungsnummer:
**WO 2004/052673 (24.06.2004 Gazette 2004/26)**

(54)  **VERFAHREN ZUR EINSTELLUNG DES BETRIEBSPUNKTS EINES ANTRIEBSSTRANGS**

METHOD FOR SETTING THE OPERATING POINT OF A DRIVETRAIN

PROCEDE DE REGLAGE DU POINT DE FONCTIONNEMENT D'UNE TRANSMISSION

(84)  Benannte Vertragsstaaten:
**DE ES FR GB IT**

(30)  Priorität: **07.12.2002  DE 10257285**

(43)  Veröffentlichungstag der Anmeldung:
**21.09.2005  Patentblatt 2005/38**

(73)  Patentinhaber: **ROBERT BOSCH GMBH
70442 Stuttgart (DE)**

(72)  Erfinder:
• **BISCHOFF, Claus
  70469 Stuttgart (DE)**
• **SCHULZ, Marcus
  71638 Ludwigsburg (DE)**

(56)  Entgegenhaltungen:
**EP-A- 0 800 945      EP-A- 0 943 475
EP-A- 0 962 352      EP-A- 1 142 749**

EP 1 575 797 B1

**Beschreibung**

Technisches Gebiet

Die Erfindung betrifft einen Verfahren zur Einstellung des Betriebspunkts eines Antriebsstrangs, welcher zur Betreitstellung einer mechanischen und einer elektrischen Leistung dient. Das Dokument EP-A-1 142 749 offenbart einen Verfahren nach dem Oberbegriff von Anspruch 1.

Stand der Technik

Der Antriebsstrang eines Kraftfahrzeugs weist in der Regel einen Verbrennungsmotor mit zwei Freiheitsgraden auf, über die der Betriebspunkt des Verbrennungsmotors eingestellt werden kann. Die Drehzahl des Verbrennungsmotors ist beispielsweise der erste Freiheitsgrad, welcher ein kinematischer Freiheitsgrad ist. Das gewünschte Drehmoment des Verbrennungsmotors ist beispielsweise der zweite Freiheitsgrad, welcher ein dynamischer Freiheitsgrad ist.

Weist der Antriebsstrang eines Kraftfahrzeugs einen Hybridantrieb, welcher einen oder mehrere elektrische Antriebe und einen Verbrennungsmotor umfasst, auf, so kann beispielsweise der erste Freiheitsgrad die Drehzahl des elektrischen Antriebs und der zweite Freiheitsgrad die Drehzahl des Verbrennungsmotors sein.

Bei dem Antriebsstrang kann es sich sowohl um einen seriellen als auch einen leistungsverzweigten Hybrid-Antriebsstrang handeln. Der Antriebsstrang kann zudem als Getriebe ein stufenloses Getriebe, welches auch als continuous various transmission Getriebe (CVT) bezeichnet wird, umfassen.

Um den optimalen Betriebspunkt, welcher beispielsweise dem geringsten Kraftstoffverbrauch entspricht, für den Antriebsstrang einzustellen oder vorzugeben, gilt es, für die beiden Freiheitsgrade diesbezüglich das Optimum zu finden.

Im Stand der Technik wird bei der Bestimmung des Betriebspunkts des Antriebsstrangs die gesamte Antriebsleistung in Form einer Summenantriebsleistung berücksichtigt, die für den Antrieb des Kraftfahrzeugs erforderlich ist. Das Verfahren zur Bestimmung der optimalen Betriebspunkte, auch Betriebestrategie genannt, legt für diese Summenantriebsleistung die Drehzahl und die Drehmomente der einzelnen Aggregate, beispielsweise des Motors und des Getriebes, fest. In der Summenantriebsleistung sind die geforderte mechanische Antriebsleistung und die Bordnetzleistung enthalten. Nachteilhafterweise sind die vom Verbrennungsmotor ebenfalls abzudeckenden Verlustleistungen der im Fahrzeug vorhandenen elektrischen Maschinen nicht oder lediglich als Schätzwerte berücksichtigt. Leistungsstarke elektrische Maschinen, insbesondere 42 V Starter-Generatoren, wie sie in innovativen Bordnetzsystemen vorgesehen sind, haben teilweise sehr hohe und stark vom Betriebspunkt abhängige Verlustleistungen. Die Verlustleistungen dieser elektrischen Maschinen wird beim Stand der Technik bisher nicht berücksichtigt.

Darstellung der Erfindung

Das erfindungsgemäße Verfahren zur Einstellung des Betriebspunkts eines Antriebsstrangs mit den in Patentanspruch 1 genannten Merkmalen bietet demgegenüber den Vorteil, dass hierbei auch die bei der Bordnetzversorgung anfallenden elektrischen Verluste berücksichtigt werden.

So wird bei dem erfindungsgemäßen Verfahren zur Einstellung des Betriebspunkts eines Antriebsstrangs, welcher zur Betreitstellung einer mechanischen und einer elektrischen Leistung dient, aus mehreren Kennfeldern anhand der erforderlichen elektrischen Leistung das korrespondierende Kennfeld ausgewählt und aus diesem Kennfeld anhand mehrerer kinematischer und/oder dynamischer Freiheitsgrade der Betriebspunkt ausgewählt.

Vorteilhafte Weiterbildungen der Erfindung ergeben sich aus den in den abhängigen Patentansprüchen angegebenen Merkmalen.

Bei einer Ausführungsform des erfindungsgemäßen Verfahrens liefert eine Steuerung für einen Energiespeicher einen Parameter, der den Zustand des Energiespeichers wiedergibt. Das korrespondierende Kennfeld wird zusätzlich anhand dieses Parameters ausgewählt. Dies hat den Vorteil, dass damit auch der Ladezustand des Energiespeichers, beispielsweise der Batterie, berücksichtigt werden kann.

Entsprechend einer bevorzugten Ausführungsvariante des erfindungsgemäßen Verfahrens zur Einstellung des Betriebspunkts eines Antriebsstrangs wird zur Bestimmung der erforderlichen elektrischen Leistung die von den Verbrauchern geforderte elektrische Leistung und die von dem Energiespeicher geforderte oder abgebbare elektrische Leistung berücksichtigt.

Bei einer Weiterbildung des erfindungsgemäßen Verfahrens wird der Energiespeicher abhängig vom Kennfeld geladen oder entladen.

Darüber hinaus kann bei dem erfindungsgemäßen Verfahren die erforderliche elektrische Leistung einer Leistungsstufe zugeordnet werden, wobei dann anhand der Leistungsstufe das korrespondierende Kennfeld ausgewählt wird.

Zur Lösung der Aufgabe wird ferner vorgeschlagen, dass bei dem erfindungsgemäßen Verfahren die Leistungsstufe anhand des Zustands des Energiespeichers und/oder der Höhe der verfügbaren Spannung ausgewählt wird. Damit können zusätzliche Rahmenbedingungen, nämlich die Höhe der Bordspannung und der Ladezustand des elektrischen Energiespeichers bei der Auswahl des Betriebspunkts berücksichtigt werden.

Vorteilhafterweise wird das erfindungsgemäße Verfahren in einem Kraftfahrzeug eingesetzt.

Bei dem erfindungsgemäßen Verfahren kann vorgesehen sein, dass der erste Freiheitsgrad durch eine die Geschwindigkeit des Kraftfahrzeugs wiedergebende Größe gebildet wird.

Bei dem erfindungsgemäßen Verfahren kann zudem vorgesehen sein, dass der zweite Freiheitsgrad durch ein Solldrehmoment gebildet wird.

Bei einer weiteren Ausführungsform des erfindungsgemäßen Verfahrens ist vorgesehen, dass der Antriebsstrang ein Getriebe aufweist, wobei über den Betriebspunkt die Übersetzung des Getriebes eingestellt wird. Damit wird erreicht, dass das Getriebe die optimale Übersetzung liefert.

Schließlich ist bei einer Weiterbildung des erfindungsgemäßen Verfahrens vorgesehen, dass der Antriebsstrang einen elektrischen Antrieb und einen Verbrennungsantrieb aufweist, wobei über den Betriebspunkt das Drehmoment oder die Drehzahl des Verbrennungsantriebs vorgegeben wird, und wobei über den Betriebspunkt das Drehmoment oder die Drehzahl des elektrischen Antriebs vorgegeben wird. Damit arbeiten bei einem Hybridantrieb sowohl der Verbrennungsantrieb als auch der elektrische Antrieb optimal.

Kurze Beschreibung der Zeichnungen

Im Folgenden wird die Erfindung anhand von fünf Figuren weiter erläutert.

Figur 1     zeigt in Form eines dreidimensionalen Diagramms ein Kennfeld mit der resultierenden Motordrehzahl eines Motors in Abhängigkeit von der Geschwindigkeit und dem Drehmoment.

Figur 2     zeigt in Form eines dreidimensionalen Diagramms ein weiteres Kennfeld mit dem resultierenden Motordrehmoment des Motors in Abhängigkeit von der Geschwindigkeit und dem Solldrehmoment.

Figur 3     zeigt in Form eines Blockschaltbilds eine mögliche Ausführungsform des erfindungsgemäßen Verfahrens zur Einstellung des Betriebspunkts.

Figur 4     zeigt in Form eines weiteren Blockschaltbilds die Struktur der Betriebsstrategie.

Figur 5     zeigt die schematische Darstellung eines Antriebsstrangs, dessen Betriebspunkt mit dem erfindungsgemäßen Verfahren eingestellt werden kann.

Wege zur Ausführung der Erfindung

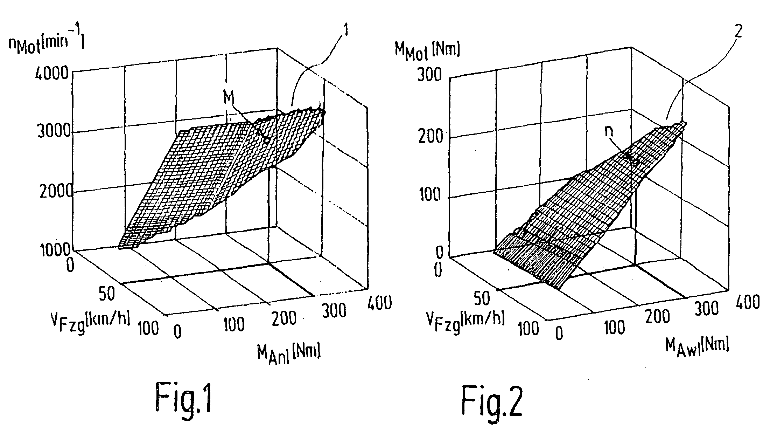

Bei dem in Figur 1 gezeigten dreidimensionalen Diagramm ist auf der nach rechts zeigenden Achse das gewünschte Drehmoment MAwl im Bereich von 0 bis 400 Nm und auf der nach links zeigenden Achse die Geschwindigkeit des Fahrzeugs vFzg im Bereich von 0 bis 100 km/h aufgetragen. Senkrecht nach oben ist schließlich die Drehzahl des Motors nMot im Bereich von 1000 bis 4000 Umdrehungen pro Minute dargestellt. Anhand des in Figur 1 dargestellten Kennfelds 1 ergibt sich beispielsweise bei einer Geschwindigkeit vFzg = 50 km/h und einen gewünschten Abtriebsdrehmoment MAwl = 300 Nm eine Motordrehzahl von nMot = 3000 Umdrehungen pro Minute.

Alternativ dazu kann mit Hilfe des in Figur 2 dargestellten Kennfelds 2 über die Geschwindigkeit vFzg des Fahrzeugs und das gewünschte Abtriebsdrehmoment MAwl auch das Motordrehmoment MMot bestimmt werden. In Figur 2 ist dazu auf der nach rechts zweiten Achse, ebenso wie in Figur 1, das gewünschte Drehmoment MAwl zwischen 0 und 400 Nm und auf der nach links zeigenden Achse, ebenso wie in Figur 1, die Geschwindigkeit vFzg des Fahrzeugs im Bereich von 0 bis 100 km/h aufgetragen. Auf der senkrecht nach oben zeigenden Achse ist jedoch das Motordrehmoment MMot im Bereich von 0 bis 300 Nm dargestellt. Bei einer Geschwindigkeit des Fahrzeugs beispielsweise von vFzg = 50 km/h und einem gewünschten Abtriebsdrehmoment von MAwl = 300 Nm ergibt sich ein Motordrehmoment MMot = 200 Nm.

In der Fahrzeugsteuerung werden offline berechnete Kennfelder abgelegt. Sie ordnen einer Fahrzeuggeschwindigkeit vFzg und einem Abtriebswunschmoment MAwl Steuergrößen zu, die das Betriebsverhalten des Antriebsstrangs optimieren und zudem die bei der Wandelung der Antriebsleistung anfallenden elektrischen Verluste ohne Belastung der Batterie abdecken.

$$PeM1mech + PeM2mech + PeM1verl + PeM2verl = 0$$

$$\Rightarrow \text{PBatterie} = 0$$

wobei

PeM1mech = mechanische Leistung der elektrischen Maschine 1,
PeM2mech = mechanische Leistung der elektrischen Maschine 2,
PeM1ver1 = Verlustleistung der elektrischen Maschine 1 und
PeM2verl = Verlustleistung der elektrischen Maschine 2.

Bei dem erfindungsgemäßen Verfahren werden neben der Geschwindigkeit vFzg des Fahrzeugs und dem gewünschten Abtriebsdrehmoment MAwl auch die vom Bordnetz geforderte Leistung PBnz und eine Zustandsgröße bEnt, auf die später noch weiter eingegangen wird, berücksichtigt. Die elektrische Leistungsbilanz ergibt sich dann zu:

$$\text{PeM1mech} + \text{PeM2mech} + \text{PeM1verl} + \text{PeM2verl} + \text{PBnz} = 0$$

Die für das Bordnetz erforderliche elektrische Leistung PBnz enthält die von den Verbrauchern im Bordnetz angeforderte elektrische Leistung PVer und die Leistungsreserve der Batterie PBat. Das Vorzeichen der Leistungsreserve PBat hängt vom Ladezustand der Batterie ab. Damit spiegelt sich das Bedürfnis die Batterie zu laden oder zu entladen in der Leistungsreserve PBat wieder.

$$\text{PBnz} = \text{PVer} + \text{PBat}$$

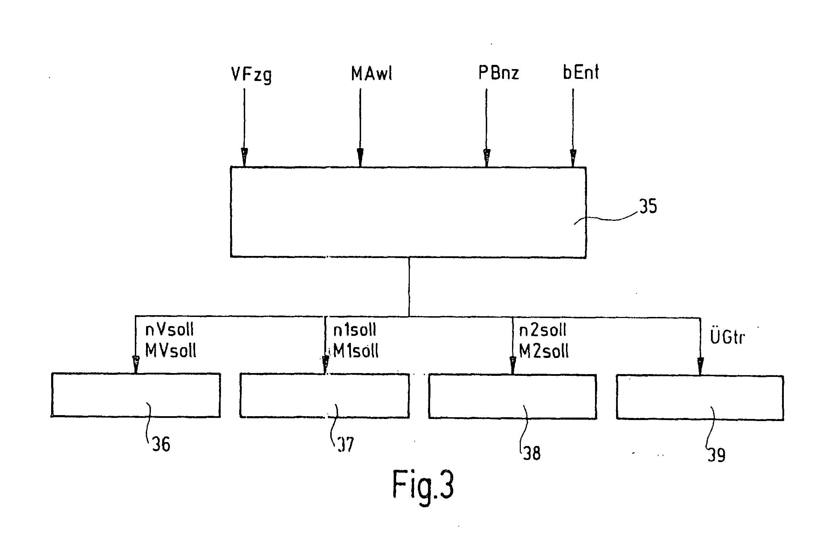

In Figur 3 wird in Form eines Blockschaltbilds eine mögliche Ausführungsform des erfindungsgemäßen Verfahrens prinzipiell dargestellt. Anhand der Größen Geschwindigkeit vFzg des Fahrzeugs, gewünschtes Abtriebsdrehmoment MAwl, erforderliche Bordnetzleistung PBat und der Zustandsgröße bEnt wird durch die mit dem Block 35 gekennzeichnete kennfeldbasierte Betriebsstrategie die Solldrehzahl oder das Solldrehmoment für den Verbrennungsmotor 36, die elektrische Maschine 1, die elektrische Maschine 2 und das Getriebe 39 bestimmt. In Figur 3 ist die elektrische Maschine 1 mit dem Bezugszeichen 37 und die elektrische Maschine 2 mit dem Bezugszeichen 38 gekennzeichnet. Mit der kennfeldbasierten Betriebsstrategie 35 wird somit die Solldrehzahl nVsoll oder das Solldrehmoment MVsoll für den Verbrennungsmotor 36, die Solldrehzahl n1soll oder das Solldrehmoment M1soll für die erste elektrische Maschine 37, die Solldrehzahl n2soll oder das Solldrehmoment M2soll für die zweite elektrische Maschine 38 und die Sollübersetzung uGtr für das Getriebe 39 vorgegeben.

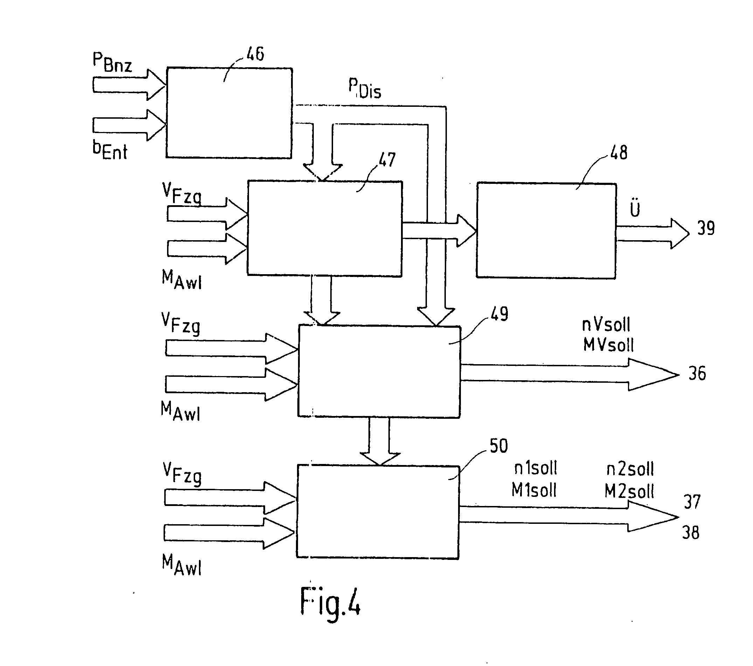

Bei der Steuerung eines Fahrzeugs sind in der Regel Steuerkennfelder mit bis zu zwei kontinuierlichen Eingangsgrößen vorgesehen. Bei dem erfindungsgemäßen Verfahren wird deshalb die Berechnung von Steuerkennfeldern für diskrete Bordnetzleistungsanforderungen (Scharparameter) vorgesehen. Hierzu wird in der Steuerkette der Betriebsstrategie ein Diskretisierer vorgesehen, siehe Figur 4. Der Diskretisierer weist der aktuellen kontinuierlichen Bordnetzleistungsanforderung nach Maßgabe eines Entscheiders bEnt eine diskrete elektrische Sollleistung des Antriebsstrangs zu. Für jede diskrete Sollleistung sind in der Kennfeldschar der Fahrzeugsteuerung Steuerkennfelder vorgesehen, die dem Antriebsstrang entsprechende Steuergrößen zuweisen. Die Differenz zwischen der angeforderten Bordnetzleistung PBnz und der diskreten elektrischen Sollleistung muss der elektrische Energiepuffer, beispielsweise in Form einer Batterie, puffern. Hochleistungsbatterien, wie beispielsweise NiMH-Batterien, sind dafür besonders geeignet. Ihr Wirkungsgrad liegt bei über 85 Prozent.

In Figur 4 ist die Struktur der Betriebsstrategie in Form eines Blockdiagramms gezeigt. Der Diskretisierer 46 erzeugt aus den beiden Eingangsgrößen, nämlich der erforderlichen elektrischen Leistung PBnz und der Zustandsgröße bEnt eine diskretisierte erforderliche elektrische Leistung PDis. Die Anzahl der verschiedenen verfügbaren Leistungsstufen PDis hängt von den technischen Randbedingungen ab. Mit Hilfe von Schaltkennfeldscharen 47 wird aus der diskretisierten Leistung PDis zusammen mit der Geschwindigkeit vFzg und dem gewünschten Abtriebsdrehmoment MAwl und einer anschließenden Übersetzungsfreigabe die Sollübersetzung uGtr für das Getriebe 39 bestimmt. Anhand der Schaltkennfeldscharen 47, der diskretisierten elektrischen Leistung PDis, der Geschwindigkeit vFzg und des gewünschten Abtriebsdrehmoments MAwl wird durch Steuerkennfeldscharen im Block 49 die Solldrehzahl nVsoll oder das Solldrehmoment MVsoll für den Verbrennungsmotor 36 bestimmt. Schließlich werden mit Hilfe der Steuerkennfeldscharen für den Verbrennungsmotor, der Geschwindigkeit vFzg und des gewünschten Abtriebsdrehmoments MAwl aus den Kopplungsbedingungen für den Antriebsstrang die Solldrehzahlen n1soll und n2soll oder die Solldrehmomente M1soll und M2soll für die beiden elektrischen Maschinen 37 und 38 bestimmt .

Der Signalfluss innerhalb der Struktur stellt sich wie folgt dar.

a) Der Diskretisierer wandelt die kontinuierliche Bordnetzsollleistung PBnz entsprechend der Entscheidungsvorgabe bEnt in eine diskrete elektrische Sollleistung (PDis0 ... PDisi ... PDisn) für den Antriebsstrang um, für die in der Betriebsstrategie Steuerkennfelder abgelegt sind. Bei der Umsetzung sind folgende Zuweisungsvorschriften vorgesehen.

bEnt=1:  Die der Bordnetzsollleistung am nächsten liegende höhere diskrete Sollleistung (PDisi+1) wird ausgegeben.

bEnt=2:  Die der Bordnetzsollleistung am nächsten liegende niedrigere diskrete Sollleistung (PDisi) wird ausgegeben.

bEnt=3:  Die höchste diskrete Sollleistung PDisn wird ausgegeben.

bEnt=4:  Die niedrigste diskrete Sollleistung PDis 0 wird ausgegeben.

Die Belastung des Signals bEnt nimmt die Betriebsstrategie unter Berücksichtigung des Ladezustands der Batterie, der Fahrsituation oder des Bordnetzspannungsniveaus vor.

b) In Abhängigkeit von den Eingangsgrößen Fahrzeuggeschwindigkeit vFzg, Wunschmoment MAwl und diskrete Sollleistung PDis wird aus der Schaltkennfeldschar eine optimale Getriebeübersetzung uGtr bestimmt .

c) Eine übergeordnete Übersetzungsfreigabe, welche ein Schalten während einer Kurvenfahrt, Doppelschaltungen, usw. verhindert, gibt die optimale Getriebeübersetzung uGtr frei.

d) Aus den Steuerfeldscharen des Verbrennungsmotors wird das zur diskreten Sollleistung PDis und der Getriebeübersetzung uGtr gehörige Kennfeld ausgewählt und es werden für die kontinuierlichen Eingangsgrößen vFzg und MAwl die entsprechenden Sollbetriebspunkte des Verbrennungsmotors ausgelesen.

e) Über Kopplungsbedingungen des Antriebsstrangs lassen sich aus den Sollbetriebspunkten des Verbrennungsmotors die Sollbetriebspunkte der elektrischen Maschinen bestimmen.

Die Bordnetzleistungsanforderung kann auch auf analoge Weise stattfinden, wenn die Bordnetzleistungsanforderung nicht auf ein diskretes Raster abgebildet wird.

Die Steuerung des Diskretisierers kann zudem über den Batterieladezustand erfolgen. Es wird dann z.B. bei stark geladener Batterie die nächste diskrete, unterhalb der kontinuierlichen Leistungsanforderung liegende Sollleistung PDisi und bei stark entladender Batterie die nächste oberhalb liegende Sollleistung PDisi+1 ausgegeben.

Die Steuerung des Diskretisierers kann auch zusätzlich über die Bordspannung erfolgen. Dann wird z.B. bei hoher Bordspannung die nächste diskrete, unterhalb der kontinuierlichen Leistungsanforderung liegende Sollleistung PDisi und bei niedriger Bordspannung die nächste oberhalb liegende Sollleistung PDisi+1 ausgegeben.

Die Steuerung des Diskretisierers kann schließlich auch noch über die Fahrsituation erfolgen. Z.B. wird nach langer Bergauffahrt die unterhalb der kontinuierlichen Leistungsanforderung liegende Sollleistung PDisi (schafft Platz für Bremsenergieregeneration) und im Stadtverkehr oder bei Stop and Go Situationen die nächste oberhalb liegende Sollleistung PDisi+1 ausgegeben.

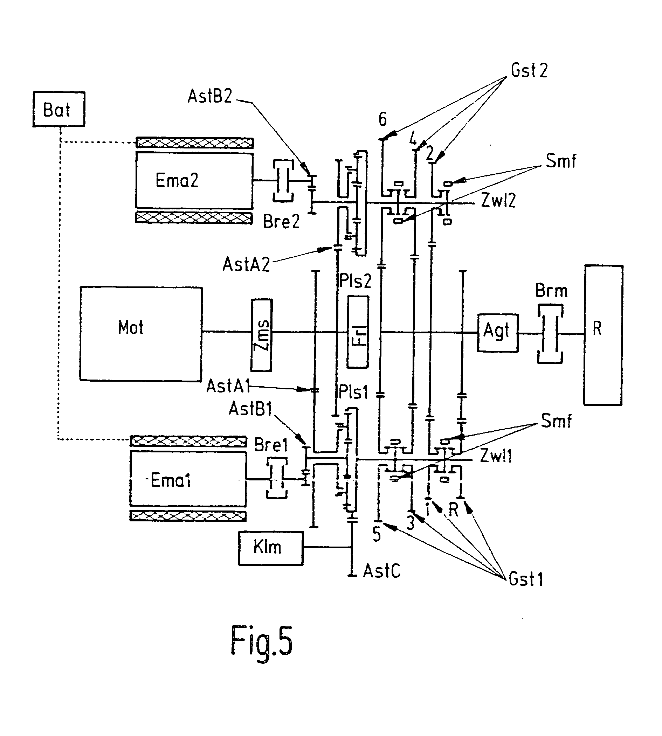

Figur 5 zeigt die schematische Darstellung eines Antriebsstrangs, dessen Betriebspunkt mit dem erfindungsgemäßen Verfahren eingestellt werden kann. Die beiden elektrischen Maschinen Ema1 und Ema2 sind mit einer Batterie Bat verbunden und werden darüber versorgt. Jede der beiden elektrischen Maschinen Ema1 und Ema2 ist über jeweils eine Maschinenbremse Bre1, Bre2, den Gangstufen Gst1 und Gst2, dem Achsgetriebe Agt und der Badbremse Brm mit einem Rad R gekoppelt. Gleiches gilt im Prinzip auch für den Verbrennungsmotor Mot, welcher jedoch zusätzlich mit einem Freilauf Frl und einem Zweimassenschwungrad Zms verbunden ist. Schließlich ist noch ein Kompressor Klm für die Klimaanlage vorgesehen, der über eine Auskuppelstufe AstC mit dem Antriebsstrang verbunden ist. Die Bezugszeichen AstB1 und AstB2 kennzeichnen die Auskuppelstufen der elektrischen Maschinen Ema1 und Ema2. Die Bezugszeichen AstA1 und AstA2 hingegen kennzeichnen die Auskuppelstufen des Verbrennungsmotors Mot. Mit Zwl1 und Zwl2 werden die Zwischenwellen bezeichnet.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

**Patentansprüche**

1. Verfahren zur Einstellung des Betriebspunkts eines Antriebsstrangs, welcher zur Bereitstellung einer mechanischen und einer elektrischen Leistung dient, **dadurch gekennzeichnet, dass** aus mehreren Kennfeldern (1) anhand der erforderlichen elektrischen Leistung (PBnz) eines Bordnetzes das korrespondierende Kennfeld (1) ausgewählt wird, und dass aus diesem Kennfeld (1) anhand mehrerer kinematischer und/oder dynamischer Freiheitsgrade (vFzg, MAwl) der Betriebspunkt ausgewählt wird.

2. Verfahren nach Patentanspruch 1, **dadurch gekennzeichnet, dass** eine Steuerung für einen Energiespeicher (Bat) des Bordnetzes einen Parameter liefert, der den Zustand des Energiespeichers (Bat) wiedergibt, und dass das korrespondierende Kennfeld (1) zusätzlich anhand des Parameters ausgewählt wird.

3. Verfahren nach einem der Patentansprüche 1 oder 2, **dadurch gekennzeichnet, dass** zur Bestimmung der erforderlichen elektrischen Leistung (PBnz) des Bordnetzes die von Verbrauchern geforderte elektrische Leistung (PVer) und die von einem Energiespeicher (Bat) geforderte oder abgebbare elektrische Leistung (PBat) berücksichtigt wird.

4. Verfahren nach Patentanspruch 3 **dadurch gekennzeichnet, dass** der Energiespeicher (Bat) abhängig vom Kennfeld (1) geladen oder entladen wird.

5. Verfahren nach einem der Patentansprüche 1 bis 4, **dadurch gekennzeichnet, dass** die erforderliche elektrische Leistung (PBnz) des Bordnetzes einer Leistungsstufe (PDis) zugeordnet wird, und dass anhand der Leistungsstufe (PDis) das korrespondierende Kennfeld (1) ausgewählt wird.

6. Verfahren nach Patentanspruch 5, **dadurch gekennzeichnet, dass** die Leistungsstufe (PDls) zusätzlich anhand des Zustands des Energiespeichers (Bat) des Bordnetzes und/oder der Höhe der verfügbaren Spannung ausgewählt wird.

7. Verfahren nach einem der Patentansprüche 1 bis 6, **dadurch gekennzeichnet, dass** es in einem Kraftfahrzeug verwendet wird.

8. Verfahren nach Patentanspruch 7, **dadurch gekennzeichnet, dass** der erste Freiheitsgrad durch eine die Geschwindigkeit (vFzg) des Kraftfahrzeugs wiedergebende Größe gebildet wird.

9. Verfahren nach einem der Patentansprüche 1 bis 8, **dadurch gekennzeichnet, dass** der zweite Freiheitsgrad durch ein Solldrehmoment (MAwl) gebildet wird.

10. Verfahren nach einem der Patentansprüche 1 bis 9, **dadurch gekennzeichnet, dass** der Antriebsstrang ein Getriebe aufweist, und dass die Übersetzung des Getriebes gesteuert wird.

11. Verfahren nach einem der Patentansprüche 1 bis 10, **dadurch gekennzeichnet, dass** der Antriebsstrang einen elektrischen Antrieb (Ema1, Ema2) und einen Verbrennungsantrieb (Mot) aufweist, dass das Drehmoment (M) oder die Drehzahl (n) des Verbrennungsantriebs (Mot) vorgegeben wird, und dass das Drehmoment (M) oder die Drehzahl (n) des elektrischen Antriebs (Ema1, Ema2) vorgegeben wird.

**Claims**

1. Method for setting the operating point of a drive train which serves to provide mechanical and electrical power, **characterized in that** the corresponding characteristic map (1) is selected from a plurality of characteristic maps (1) on the basis of the required electrical power (PBnz) of an on-board vehicle electrical system, and **in that** the operating point is selected from this characteristic map (1) on the basis of a plurality of kinematic and/or dynamic degrees of freedom (vFzg, MAwl).

2. Method according to Patent Claim 1, **characterized in that** a control system for an energy store (Bat) of the on-board vehicle electrical system supplies a parameter which expresses the state of the energy store (Bat), and **in that** the corresponding characteristic map (1) is additionally selected on the basis of the parameter.

3. Method according to either of Patent Claims 1 and 2, **characterized in that**, in order to determine the required electrical power (PBnz) of the on-board vehicle electrical system, the electrical power (PVer) which is requested by loads and the electrical power (PBat) which is requested or can be emitted by an energy store (Bat) are taken into account.

4. Method according to Patent Claim 3, **characterized in that** the energy store (Bat) is charged or discharged as a function of the characteristic map (1).

5. Method according to one of Patent Claims 1 to 4, **characterized in that** the required electrical power (PBnz) of the on-board vehicle electrical system is associated with a power stage (PDis), and **in that** the corresponding characteristic map (1) is selected on the basis of the power stage (PDis).

6. Method according to Patent Claim 5, **characterized in that** the power stage (PDis) is additionally selected on the basis of the state of the energy store (Bat) of the on-board vehicle electrical system and/or the level of the available voltage.

7. Method according to one of Patent Claims 1 to 6, **characterized in that** the said method is used in a motor vehicle.

8. Method according to Patent Claim 7, **characterized in that** the first degree of freedom is formed by a variable which expresses the speed (vFzg) of the motor vehicle.

9. Method according to one of Patent Claims 1 to 8, **characterized in that** the second degree of freedom is formed by a setpoint torque (MAwl).

10. Method according to one of Patent Claims 1 to 9, **characterized in that** the drive train has a gear mechanism, and **in that** the transmission ratio of the gear mechanism is controlled.

11. Method according to one of Patent Claims 1 to 10, **characterized in that** the drive train has an electric drive (Ema1, Ema2) and an internal combustion drive system (Mot), **in that** the torque (M) or the rotational speed (n) of the internal combustion drive system (Mot) is predefined, and **in that** the torque (M) or the rotational speed (n) of the electric drive (Ema1, Ema2) is predefined.

**Revendications**

1. Procédé de réglage du point de fonctionnement d'une transmission servant à fournir une puissance mécanique et une puissance électrique,
   **caractérisé en ce qu'**
   on sélectionne le champ de caractéristiques (1) correspondant dans plusieurs champs de caractéristiques (1) à l'aide de la puissance électrique requise (PBnz) du réseau embarqué, et
   à partir de ce champ de caractéristiques (1), on sélectionne le point de fonctionnement à l'aide de plusieurs degrés de liberté cinématiques et/ ou dynamiques (vFzg, MAwl).

2. Procédé selon la revendication 1,
   **caractérisé en ce qu'**
   une commande d'un accumulateur d'énergie (Bat) du réseau embarqué fournit un paramètre représentant l'état de l'accumulateur d'énergie (Bat), et
   on sélectionne le champ de caractéristiques correspondant (1) en plus à l'aide de ce paramètre.

3. Procédé selon l'une des revendications 1 ou 2,
   **caractérisé en ce que**
   pour déterminer la puissance électrique nécessaire (PBnz) pour le réseau embarqué, on tient compte de la puissance électrique (PVer) demandée par les consommateurs et de la puissance électrique (PBat) demandée ou que restitue l'accumulateur d'énergie (Bat).

4. Procédé selon la revendication 3,
   **caractérisé en ce qu'**
   on charge ou on décharge l'accumulateur d'énergie (Bat) en fonction du champ de caractéristiques (1).

5. Procédé selon l'une des revendications 1 à 4,
   **caractérisé en ce que**
   la puissance électrique requise (PBnz) du réseau embarqué est associée à un étage de puissance (PDis), et à l'aide de l'étage de puissance (PDis) on sélectionne le champ de caractéristiques correspondant (1).

6. Procédé selon la revendication 5,
   **caractérisé en ce qu'**
   on sélectionne l'étage de puissance (PDis) en plus à l'aide de l'état de l'accumulateur d'énergie (Bat) du réseau embarqué et/ou du niveau de tension disponible.

7. Procédé selon l'une des revendications 1 à 6,
   **caractérisé en ce qu'**
   il est appliqué à un véhicule automobile.

8. Procédé selon la revendication 7,
   **caractérisé en ce que**
   le premier degré de liberté est formé par une grandeur représentant la vitesse (vFzg) du véhicule automobile.

9. Procédé selon l'une des revendications 1 à 8,
   **caractérisé en ce que**
   le second degré de liberté est formé par un couple de consigne (MAwl).

10. Procédé selon l'une des revendications 1 à 9,
    **caractérisé en ce que**
    la transmission comporte une boîte de vitesses et on commande le rapport de la boîte de vitesses.

11. Procédé selon l'une des revendications 1 à 10,
    **caractérisé en ce que**
    la transmission comporte un moteur électrique (Ema1, Ema2) ou un moteur à combustion (Mot), et on prédéfinit le couple (M) ou la vitesse de rotation (n) du moteur à combustion (Mot), et
    on prédéfinit le couple (M) et la vitesse de rotation (n) du moteur électrique (Ema1, Ema2).

Fig.1

Fig.2

EP 1 575 797 B1

Fig.3

Fig.4

Fig.5

**EP 1 575 797 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1142749 A